# EUROPÄISCHE PATENTANMELDUNG

(11) **EP 1 897 677 A2**
(43) Veröffentlichungstag der Anmeldung: **12.03.2008**
(21) Anmeldenummer: 07016849.7
(22) Anmeldetag: 28.08.2007
(51) Int. Cl.: B29C 65/14

(54) **Vorrichtung zum mikrowellengeführten Verschweißen von thermoplastischen Formteilen, Verfahren und Verwendung des Verfahrens**

(30) Priorität: 11.09.2006 DE 102006042540
(71) Anmelder: Fraunhofer-Gesellschaft zur Förderung der angewandten Forschung, 80686 München (DE)
(72) Erfinder: Emmerich, Rudolf, 76456 Kuppenheim (DE); Schönwald, Markus, 68794 Waghäusel (DE); Elsner, Peter, 76327 Pfinztal (DE); Muegge, Horst, 67678 Lindenfels (DE); Michel, Peter, 95028 Hof (DE); Riepenhausen, Holm, 95111 Rehau (DE); Rudlof, Manfred, 95111 Rehau (DE)
(74) Vertreter: Pfenning, Meinig & Partner GbR

(57) **Zusammenfassung**

Vorliegende Erfindung beschreibt eine Vorrichtung zum mikrowellengeführten Verschweißen von mindestens zwei Formteilen (1a,1b) aus Thermoplasten, umfassend ein Magnetron (20) mit Generator (21) zur Erzeugung von Mikrowellen mit einer Frequenz zwischen 0,3 und 300 GHz, mindestens ein daran angeordnetes Mittel (5) zum Führen der Mikrowellen zur Schweißzone, sowie eine an das Mittel (5) zum Führen der Mikrowellen angeordnete Anpressvorrichtung (3) zum Zusammenpressen der mindestens zwei Formteile, die dabei zwischen der Anpressvorrichtung (3) und dem Mittel (5) zum Führen der Mikrowellen anordenbar sind.

## Beschreibung

Vorliegende Erfindung beschreibt eine Vorrichtung zum mikrowellengeführten Verschweißen von Formteilen aus Thermoplasten, ein dazugehöriges Schweißverfahren sowie die Verwendung des Verfahrens.

An Spritzgussformteilen ist es im Allgemeinen nicht möglich, hinter der optisch anspruchsvollen Sichtfläche Wandungen für Funktionselemente im Spritzgussprozess einstückig anzuformen, ohne dass diese Wandungen sich auf der optisch hochsensiblen Außenseite abzeichnen. Grund hierfür ist der dreidimensionale Schrumpfprozess, nach dem das Spritzgussmaterial im Spritzgussvorgang eingefroren ist und der vom Anguss her kommende Nachdruck an dieser Stelle nicht mehr wirken kann. Nach dem Schrumpfprozess nach Entformen des Werkzeuges und Abkühlung des dann fertigen Formteils werden diese dreidimensionalen Schrumpfbereiche als Abzeichnungen auf der Außenseite deutlich sichtbar. Aus diesen Gründen ist es im Allgemeinen bei hochsensiblen Außenhautbauteilen für optisch hochsensible Oberflächen, wie z.B. Bauteile im Automobilbau, in der Weißgeräteindustrie, bei Möbeln usw. nicht möglich, Funktionselemente hinter Sichtoberflächen anzuspritzen.

Im Allgemeinen wird deswegen nach dem Spritzgießen der Außenhaut auf der Rückseite ein extra hergestelltes Formteil zweistückig angefügt. In Frage dafür kommen sämtliche Fügeverfahren, die sich jedoch hinsichtlich wirtschaftlicher Fertigung, Qualität und gegebenenfalls Beeinflussung der Sichtfläche erheblich unterscheiden. Schweißprozesse sind wirtschaftlich sehr gut realisierbar, besitzen im Allgemeinen kurze Taktzeit, sind gut reproduzierbar, zudem liegt ausreichendes Know-how vor. Jedoch wirken sich auch Schweißprozesse durch die dann frei werdende Schweißwärme und Nachschrumpfprozesse wiederum auf die Sichtseite aus.

Klebeprozesse sowohl mit pastösen Klebern, Flüssigkleber als auch mit Klebebändern sind im Allgemeinen wirtschaftlich deutlich nachteilig, entweder durch lange Aushärtezeiten des Klebers und dadurch bedingte Haltevorrichtungen, oder durch hohe Kosten für schnell aushärtende Kleber oder Klebebänder. Ferner benötigen die Klebungen sehr oft zusätzliche Vorbereitungen und Voraussetzungen in Form von z.B. Reinigung, Entfettung, Primerung zur Steigerung der Adhäsionskräfte. Hinzu kommen die oft schwer zu kontrollierende Qualität und zumindest in Form von Flüssigklebern gegebenenfalls Arbeitsplatzbelastungen, die sich ebenfalls negativ auf die Wirtschaftlichkeit auswirken.

Ein alternativer Ansatz ist es, durch Ultraschallschweißen, wobei durch geeignete Ausbildung der Sonotroden geringe Schweißzeiten und geringe Eintauchtiefe der Schweißsonotroden gewährleistet werden, einen Mittelweg zwischen ausreichender Schweißfestigkeit und geringster Beeinflussung der Oberfläche einzuhalten. Ein Beispiel hierfür sind die Schweißungen von sog. Haltern für Parkdistanzsensoren (PDC) an Stoßfängern. Aber auch jede andere Form von Funktionselement/Halterung hinter optisch sensibler Oberfläche ist gleichfalls betroffen und denkbar.

Die Schweißung mit Ultraschall findet im Allgemeinen mit sog. "Igel-Sonotroden" statt, wobei feine Nadeln durch den auf der Rückseite des zu verschweißenden optisch anspruchsvollen Bauteils durch das Funktionselement/die Halterung hindurch dringen, diese partiell aufschmelzen und nur ca. 0,2 mm in die zu schweißende Außenhaut eindringen. Die Verdrängung des Schmelzflüssigmaterials um die Nadeln herum sorgt lokal für eine Schweißverbindung. Typische Haftkräfte dieser Halterungen hinter polymeren Außenhautbauteilen, z.B. Stoßfänger, sind 200 bis 400 N.

Andere Schweißverfahren, wie z.B. Spiegelschweißen oder Reibschweißen, kommen nicht in Betracht, da die Auswirkungen deren Schweißwärme auf die Sichtseite des polymeren Formteils weitaus größer und damit unakzeptabel ist.

Die mit Ultraschallschweißen hergestellten Verbindungen sind optisch auf der Außenseite eines Verkleidungsteiles eindeutig zu lokalisieren, vor allem wenn das Außenhautbauteil z.B. durch eine stark glänzende Lackierung optisch hochsensibel ist.

Als Abhilfe wird das Mikrowellenschweißen vorgesehen. Zum Mikrowellenschweißen sind bereits verschiedene Schutzschriften bekannt: So ist z.B. aus dem US-Patent 5,338,611 bekannt, dass mit Leitfähigkeitsruß gefüllten Zwischenlagen zwischen 2 Schweißpartnern in einem Mikrowellenfeld geschweißt werden kann. Die Ausführung der Schweißungen im US-Patent 5,338,611 ist aber insofern nicht für polymere Bauteile in Großserienproduktion tauglich, da die Autoren die Schweißungen in einem Mikrowellenofen durchführten, wobei sie den Anteil des Leitfähigkeitsrußes in der Zwischenlage auf einen so geringen Anteil reduzierten, dass die Schweißzeit mindestens 30 Sekunden (1/2 Min.) beträgt, um das Schweißergebnis mit der Stoppuhr kontrollieren zu können. Diese Schweißzeiten sind für Großserienausführungen unwirtschaftlich. Ein Schweißen von großen polymeren Formteilen, wie z.B. Automobilbauteilen im Ofen, ist wegen der Investitionskosten und der Handlingskosten inakzeptabel.

Aus der EP 0 705 682 A1 ist ein Verfahren zum thermischen Verbinden von Substraten aus Polymeren bekannt. Dabei wird von zwei zu verbindenden Partnern einer mit einem mikrowellenabsorbierenden Medium beschichtet. Hierzu wurde ein Fügepartner mit einer Flüssigkeit benetzt, die maximal 1 % Leitfähigkeitsruß enthielt. Dieses Verfahren ist insbesondere für die Mikroindustrie von Interesse. Für die Fertigung von automobilen Großformteilen ist dieses Verfahren unpraktikabel. Ferner ist die Herstellung von Sintermaterialien geschützt, wobei die Granulatperlen mit der Leitfähigkeitsruß enthaltenden Flüssigkeit benetzt werden und dann im Mikrowellenfeld zusammengebacken werden. Zur Ausführung des Mikrowellenfeldes selbst sind keine Ausführungen gemacht.

Aus dem US-Patent 5,603,795 ist ein Verfahren bekannt, in dem zwei Platten durch eine Mikrowellenschweißung verbunden werden. Hier wird ebenfalls eine Zwischenschicht benutzt, die durch entweder Sputtering, Spray, Plasmaniederschlag oder Benetzung mit einer Flüssigkeit aufgebracht wird. Auch hier wird in einer Mikrowellenkammer unter mechanischem Druck verschweißt. Ziel des Verfahrens ist die Herstellung von Filtermaterial aus Granulaten thermoplastischer Polymere, Verpackungsmaterial aus Granulaten der Polymere und Herstellung von mechanisch oder thermisch wirksamem Dämmmaterial aus Polymeren.

Keines der vorstehend beschriebenen Patente/Schutzschriften beschreibt eine Vorrichtung, die Verbindungen von Funktionselementen hinter optisch sensiblen Oberflächen, die nicht beeinflusst werden dürfen, ermöglicht.

Aufgabe der Erfindung ist es daher, eine Vorrichtung anzugeben, die Funktionselemente auf Bauteile anbringen kann, die spritzgusstechnisch nicht herstellbar sind, ohne sich optisch auf der Sichtseite abzuzeichnen und damit die optisch sensible Oberfläche zu beeinträchtigen. Weiterhin ist es Aufgabe der Erfindung, ein Verfahren anzugeben, mit dem ein Schweißprozess durch Mikrowellenschweißen möglichst wirtschaftlich, mit kurzen Schweißzyklen, hohen Festigkeiten und guter Reproduzierbarkeit ermöglicht wird.

Diese Aufgabe wird durch die Vorrichtung mit den Merkmalen des Anspruchs 1, das Verfahren mit den Merkmalen des Anspruchs 28 sowie die Verwendung mit den Merkmalen der Ansprüche 50 bis 53 gelöst. Die abhängigen Ansprüche zeigen dabei vorteilhafte Weiterbildungen auf.

Erfindungsgemäß wird eine Vorrichtung zum mikrowellengeführten Verschweißen von mindestens zwei Formteilen aus Thermoplasten bereitgestellt, wobei ein Magnetron mit Generator zur Erzeugung von Mikrowellen mit einer Frequenz zwischen 0,3 und 300 GHz, mindestens ein daran angeordnetes Mittel zum Führen der Mikrowellen zur Schweißzone, sowie eine an das Mittel zum Führen der Mikrowellen angeordnete Anpressvorrichtung zum Zusammenpressen der mindestens zwei Formteile, die dabei zwischen der Anpressvorrichtung und dem Mittel zum Führen der Mikrowellen anordenbar sind, umfasst ist.

In einer vorteilhaften Ausführungsform der Erfindung ist das Mittel zum Führen der Mikrowellen eine Rohrantenne. Weiterhin ist es vorteilhaft, wenn diese Rohrantenne zweiteilig ausgeführt ist, sodass sie einen Hohlleiter und einen Koaxialleiter aufweist. Dabei ist der Koaxialleiter zwischen dem Magnetron und Holleiter angeordnet. Dabei ist es unerheblich, wie die geometrische Anordnung des Hohlleiters und des Koaxialleiters zueinander erfolgt, in einer speziellen Ausführungsform schließen der Hohlleiter und der Koaxialleiter jedoch einen Winkel von 90° miteinander ein. Um eine möglichst effiziente Führung der Mikrowellen zu gewährleisten, und somit Strahlungsverluste zu vermeiden, ist es vorteilhaft, wenn die Wandung sowohl des Hohlleiters und Koaxialleiters aus einem Metall oder einem elektrisch leitfähigen Material besteht. Erfindungsgemäß schließt der Begriff Metall selbstverständlich auch metallische Legierungen ein.

In einer weiteren vorteilhaften Ausführungsform enthalten der Hohlleiter und der Koaxialleiter ein für Mikrowellen in einem Frequenzbereich von 0,3 bis 300 GHz permeables Material. Dieses Material kann dabei ausgewählt sein aus der Gruppe bestehend aus Thermoplasten, Duroplasten, Keramiken und/oder Gläsern. Als für Mikrowellen permeables Material eignet sich insbesondere Polytetrafluorethylen (PTFE).

Weiterhin ist es zu bevorzugen, wenn das Mittel zum Führen der Mikrowellen einen Rohrdurchmesser zwischen 1 mm und der Wellenlänge der verwendeten Mikrowellen, bevorzugt jedoch zwischen 20 mm und 120 mm, ganz besonders bevorzugt zwischen 40 mm und 70 mm aufweist.

Zudem ist es vorteilhaft, wenn mindestens eines der mindestens zwei zu verschweißenden Formteile, über eine Haltevorrichtung am Mittel zum Führen der Mikrowellen fixierbar ist. Beispielsweise kann dies derart ausgestaltet sein, dass das für Mikrowellen permeable Material eine Ausbuchtung aufweist, in die eines der mindestens zwei zu verschweißenden Formteile formschlüssig eingelassen werden kann und somit für den Schweißvorgang fixiert ist. Dadurch ist gewährleistet, dass der Schweißvorgang sehr präzise erfolgt und somit eine gute Reproduzierbarkeit des verschweißten Produktes erzielt wird.

Um die vom Magnetron erzeugten Mikrowellen effizient in das Mittel zum Führen der Mikrowellen einzukuppeln, ist vorteilhafterweise ein für Mikrowellen refraktives und/oder reflexives Element vorhanden, das zwischen dem Koaxialleiter und dem Magnetron angeordnet ist. Im Speziellen ist das Element dabei in Form eines Kegels ausgestaltet.

Weiterhin ist es vorteilhaft, wenn eine Drehvorrichtung zum Drehen des Mikrowellenfeldes vorhanden ist. Das Mikrowellenfeld ist in dem Mittel zum Führen der Mikrowellen gerichtet, d.h. die Wellen schwingen in einer Ebene parallel zur Längsachse. In dieser Ebene wird eine Erwärmung des Schweißzusatzmaterials bewirkt, wohingegen quer hierzu keine Erwärmung stattfinden kann. Das bedeutet, dass am beispielsweise runden Umfang der Schweißfläche an zwei gegenüberliegenden Bereichen von experimentell ermittelten ca. jeweils 90 ° geschweißt werden kann. Der übrige Umfang wird höchstens durch die geringe Wärmeleitung beeinflusst, die nicht ausreichend ist, um eine permanente Verbindung zu gewährleisten.

Besonders bevorzugt ist es, wenn die Drehvorrichtung an der Haltevorrichtung angeordnet ist und so auf diese einwirkt, dass eine Rotation der in der Haltevorrichtung fixierbaren, mindestens zwei zu verschweißenden Formteilen bewirkt wird. Dabei kann die Drehvorrichtung als beliebige geeignete mechanische Vorrichtung, z.B. als Riemenscheibe, ausgebildet sein, die an der Haltevorrichtung fixiert und mit einem Elektromotor versehen ist.

In einer alternativen, vorteilhaften Ausführungsform wirkt die Drehvorrichtung auf das Mittel zum Führen der Mikrowellen ein und bewirkt eine Drehung des Mittels zum Führen der Mikrowellen um 1 ° bis 359 °. Wie im voranstehenden bevorzugten Ausführungsbeispiel kann die Drehvorrichtung ebenfalls als beliebige geeignete mechanische Ausführungsform gestaltet sein.

Eine weitere alternative vorteilhafte Ausführungsform sieht vor, dass die Drehvorrichtung derart am Mittel zum Führen der Mikrowellen angeordnet ist, dass es eine teilweise Auskopplung der Mikrowellenstrahlung aus dem Mittel (5) zum Führen der Mikrowellenstrahlung, Drehung der Schwingungsebene der Transversalwellen der Mikrowellen um mindestens 30 °, höchstens jedoch um 180 ° und anschließend eine erneute Einkopplung der Mikrowellen in das Mittel (5) zum Führen der Mikrowellenstrahlung bedingt. Dabei sind beliebige, aus dem Stand der Technik bekannte Mittel geeignet, die eine Drehung des Wellenfeldes bewirken.

Die Anpressvorrichtung kann ebenso eine pneumatische Steuerung aufweisen, was vor allem dann vorteilhaft ist, wenn die Schweißvorrichtung als automatisierte Vorrichtung ausgestaltet wird.

Bevorzugt ist es dabei, dass die Anpressvorrichtung in Form eines flexiblen Faltenbalgzylinders ausgeführt ist. Die Anpressvorrichtung kann dabei ebenso eine Abschlussplatte aufweisen, die in Kontakt mit den mindestens zwei zu verschweißenden Formteilen bringbar ist. Die Abschlussplatte kann dabei der jeweiligen geometrischen Form des einen zu verschweißenden Formteils ausgestaltet sein, sodass die Abschlussplatte beim Anpressvorgang formschlüssig an das zu verschweißende Formteil angepresst wird. Somit ist eine gleichmäßige Verteilung des Anpressdrucks gewährleistet, was sich ebenso vorteilhaft auf das Ergebnis des Schweißvorgangs auswirkt.

Weiterhin ist es bevorzugt, dass zusätzlich ein Zirkulator, der im Anschluss an das Magnetron angeordnet ist, vorhanden ist.

Bevorzugt ist ebenso, dass zur Optimierung der Mikrowellenleistung ein Autotuner oder in einer alternativen Ausführungsform ein manueller Tuner vorhanden ist, der im Anschluss an den Zirkulator angeordnet ist.

Die thermoplastischen Materialien der mindestens zwei zu verschweißenden Formteile sind dabei vorteilhafterweise ausgewählt aus Polyolefinen, insbesondere Polyethylen und/oder Polypropylen, Polyvinylchlorid, Polycarbonaten, Polymethylmethacrylat, Polyamiden, insbesondere Nylon und/oder Perlon, Polystyrol, Polyetherimiden, Polyarylsulfonen, Polyphenylsulfiden, Polyphenyloxiden, Polysulfonen, Polyethersulfonen, Polyetherethersulfonen und/oder Blends hieraus.

Erfindungsgemäß ist es dabei unerheblich, ob die mindestens zwei zu verschweißenden Formteile aus demselben oder verschiedenen Thermoplasten und/oder deren Blends bestehen.

Selbstverständlich können dabei die mindestens zwei zu verschweißenden Formteile, weitere Zusatzstoffe, die üblicherweise dem Fachmann für Kunststoff bekannt sind, vor allem aber ausgewählt aus der Gruppe bestehend aus Weichmachern, Flammschutzmitteln, Verstärkungsfasern und/oder Pigmenten enthalten.

Besonders bevorzugt ist es, wenn die Schweißvorrichtung auf einem Roboter aufgebracht ist.

Erfindungsgemäß wird ebenso ein Verfahren zum mikrowellengeführten Schweißen von mindestens zwei zu verschweißenden Formteilen aus Thermoplasten bereitgestellt, das sich dadurch auszeichnet, dass die Mikrowellen gerichtet zu den mindestens zwei zu verschweißenden Formteilen geleitet werden.

Dabei werden die Mikrowellen über eine einen Hohlleiter und einen Koaxialleiter aufweisende Rohrantenne geführt.

Die Mikrowellen werden dabei über ein für Mikrowellen refraktives und/oder reflexives Element in die Rohrantenne eingekoppelt.

Bevorzugt ist es dabei, wenn die von dem refraktiven und/oder reflexiven Element in Richtung des Magnetrons zurückreflektierte Strahlung über einen Zirkulator abgeführt wird. Dies kann beispielsweise über einen Kühlwasserkreislauf erfolgen. Zur Optimierung des Schweißverfahrens ist es dabei ebenso bevorzugt, dass eine Messung der rückreflektierten Strahlungsleistung erfolgt.

Vorteilhafterweise erfolgt dabei die Steuerung der vom Generator abgegebenen Leistung zum Betreiben des Magnetrons in Abhängigkeit von der ermittelten rückreflektierten Strahlungsleistung. Die Leistungsabgabe des Generators wird dabei so gesteuert, dass gewährleistet ist, dass die bei den zu verschweißenden Formteilen ankommende Strahlungsenergie quasi konstant ist.

Die Leistungsabgabe des Generators beträgt dabei zwischen 0,1 kW und 100 kW, bevorzugt 0,8 und 1,5 kW.

Niedrigere Leistungen erbrachten kein besseres Ergebnis. Im Gegenteil: Bei niedrigeren Leistungen musste länger geschweißt werden, was zu Verbrennungen an der Innenkante des Schweißzusatzwerkstoffes führte.

Allgemein ist bei der Auslegung und bei der Bemessung der Schweißleistung darauf zu achten, dass an der Innenkante des Schweißzusatzes noch keine thermische Überbeanspruchung erfolgt. Die thermische Überbeanspruchung macht sich sehr schnell als Verbrennung/Veraschung bemerkbar, wobei die örtliche Festigkeit des Schweißzusatzmaterials auf 0 absinkt. Optimale Schweißung zeigt sich im Bruchbild als gleichmäßiger weißer Belag, durchsetzt mit schwarzen, maximal stecknadelkopfgroßen Bindestellen/Kohäsionsbruch.

Beim Schweißvorgang nehmen die mindestens zwei zu verschweißenden Formteile dabei Strahlungsleistung zwischen 50 W und 2000 W, bevorzugt zwischen 100 W und 400 W, ganz besonders bevorzugt zwischen 150 W und 200 W auf.

Weiterhin ist es bevorzugt, dass in der Rohrantenne ein Drehen des Mikrowellenfeldes erfolgt.

Ebenso ist es bevorzugt, dass zwischen die mindestens zwei zu verschweißenden Formkörper ein mikrowellensensitives Material eingebracht wird. Dabei enthält das mikrowellensensitive Material vorteilhafterweise eine in eine Trägermatrix eingebettete mikrowellenabsorbierende Komponente.

Diese Komponente ist dabei vorteilhafterweise ein Thermoplast. Im Speziellen ist der Thermoplast dabei ausgewählt aus der Gruppe bestehend aus Polypropylen, Elastomer-modifiziertem Polypropylen (PP-EMPP), Polyamid (PA), Polyvinylchlorid (PVC), Polyester, Polyvinylidendifluorid (PVDF), Polycarbonat (PC), Polymethylmethacrylat (PMMA), Acrylnitril-Butadien-Styrol (ABS) und/oder Polyethylen (PE).

Erfindungsgemäß ist es dabei unerheblich, ob der Thermoplast des mikrowellensensitiven Materials aus dem gleichen oder einem verschiedenen Material besteht, wie die mindestens zwei zu verschweißenden Formteile.

Vorteilhafterweise ist dabei die mikrowellenabsorbierende Komponente Ruß, der bevorzugt Leitfähigkeitsruß, aber auch normaler Ruß sein kann. Insbesondere ist der Ruß in der Trägermatrix in einer Menge zwischen 10 und 50 Gew.-%, bevorzugt zwischen 15 und 40 Gew.-%, ganz besonders bevorzugt zwischen 20 und 30 Gew.-% enthalten.

Vorteilhafterweise wird das mikrowellensensitive Material in Form einer Folie eingesetzt. Die Dicke der Folie kann dabei zwischen 0,1 und 3 mm, bevorzugt zwischen 0,2 und 0,8 mm betragen.

In einer alternativen, besonders vorteilhaften Ausführungsform ist das mikrowellensensitive Material auf mindestens einem der mindestens zwei zu verschweißenden Formteile als dünne Schicht durch Zweikomponentenspritzguss aufgebracht.

Während des Schweißvorgangs ist es vorteilhaft, wenn die mindestens zwei zu verschweißenden Formteile aneinander gepresst werden.

Überraschenderweise wurde gefunden, dass im Vergleich zum Stand der Technik kurze Schweißzeiten ausreichend sind, um eine effiziente Verschweißung der mindestens zwei zu verschweißenden Formteile zu gewährleisten. Die Dauer des Schweißprozesses liegt dabei zwischen 0,5 und 25 s, vorzugsweise zwischen 1 und 15 s, ganz besonders bevorzugt zwischen 3 und 5 s. Die Länge des Schweißprozesses wird dabei je nach Art der zu verschweißenden Formteile sowie den Erfordernissen an die Schweißnaht ausgewählt.

Erfindungsgemäß findet das Verfahren Verwendung bei der Serienproduktion. Ebenso kann das Verfahren bei vollautomatischen Prozessen verwendet werden. In Versuchen konnte gezeigt werden, dass mit erfindungsgemäßem Verfahren es nun auch möglich ist, mechanisch und/oder optisch hochsensible Oberflächen ohne jegliche Beeinträchtigung zu verschweißen. Dabei können die Oberflächen auch lackiert sein, beispielsweise ist auch die Lackierung durch äußerst sensible Metalliclack-Beschichtungen kein ausschließendes Kriterium zur Anwendung des Schweißverfahrens mehr.

Insbesondere findet das Verfahren Verwendung bei der Herstellung von Formteilen in der Automobilindustrie, insbesondere bei Stoßfängern, Überzügen, Kotflügeln und Heckspoilern. Beispielsweise können dabei Park-Distance-Control-Sensoren (PDC) in die Stoßstangen effizient eingeschweißt werden.

Jedoch sind auch weitere Verwendungszwecke des erfindungsgemäßen Verfahrens denkbar, insbesondere im Bereich der Automobilindustrie. Das erfindungsgemäße Verfahren ermöglicht gegenüber dem Stand der Technik wesentliche Vorteile.

Als Vorteil ist anzusehen, dass mit dem erfindungsgemäßen Verfahren kurze Schweißzeiten ermöglicht werden, die eine wirtschaftliche Anwendung des Verfahrens, vor allem in der Serienproduktion, ermöglichen. Somit ist eine Anwendung des Verfahrens insbesondere im industriellen Umfeld prädestiniert.

Die erfindungsgemäße Vorrichtung kann beliebig in der Größe reduziert werden und somit auch auf einem Roboter montiert werden. Die somit auf einem Roboter aufgebrachte Schweißvorrichtung ist natürlich auch mit weiteren, materialverarbeitenden, Vorrichtungen kombinierbar, z.B. mit Vorrichtungen zum Stanzen oder Schneiden, die ebenfalls auf einem Roboter angebracht sein können, so dass die erfindungsgemäße Schweißvorrichtung Teil einer komplexen Vorrichtung sein kann, mit der mehrere Arbeitsschritte zusammenfassend ausgeführt werden können.

Das gerichtete Führen der Mikrowellen zur Schweißzone ermöglicht dabei eine effiziente Nutzung der Strahlungsleistung. Zudem sind somit keine Kammern bzw. Mikrowellenöfen vonnöten, was ebenfalls zur Miniaturisierung der Vorrichtung führt.

Ein weiterer Vorteil der erfindungsgemäßen Vorrichtung ist, dass nur sehr geringe biologisch schädliche Leistungen in die Umwelt abgegeben werden. Selbst diese geringen abgegebenen, biologisch schädlichen Leistungen können durch einfache Vorrichtungen, wie Einhausen, z.B. mit einfachen Gitterwänden, wirkungsvoll abgeschirmt werden.

Durch das Fixieren der zu verschweißenden Formteile ist eine hohe Gleichmäßigkeit des Schweißergebnisses garantiert.

Weiterhin ist ein wesentlicher Vorteil der Erfindung, dass sich praktisch keine Abzeichnungen auf der optisch anspruchsvollen Außenfläche ergeben.

Hervorzuheben ist dabei, dass die offen austretende Mikrowelle auch lackierte Außenhautbauteile optisch nicht beeinträchtigt. Die Lackmaterialien werden von der Mikrowelle nicht beeinflusst. Dies gilt auch für sog. Metallic-Lacke, bei denen der Metallic-Effekt durch eingearbeitete Metallfilter erzeugt wird. Diese werden bei allen Schweißversuchen nicht erkennbar und nicht messbar beeinflusst. Die Lackoberfläche bleibt unberührt, der Farbeindruck bleibt völlig unverändert. Dies gilt auch für große eingestrahlte Leistungen. Dabei besteht auch ausreichende "Gutmütigkeit" des Prozesses gegen Schwankungen und Fehler des Prozesses. Weiterhin ist hervorzuheben, dass das erfindungsgemäße Verfahren auch eine Verschweißung von mehr als zwei Formteilen auf angegebene Weise ermöglicht. Damit können z.B. drei oder mehr Formteile im fixierten und aneinander gepressten Zustand innerhalb eines einzelnen Verfahrensschrittes miteinander verschweißt werden.

Mit der erfindungsgemäßen Vorrichtung bzw. dem Verfahren werden optisch hervorragende Schweißungen erzielt mit Abzugskräften von 500 bis 1000 N, d.h. weit über dem beim Ultraschallschweißen erreichbaren Stand.

Die vorliegende Erfindung wird in folgender Figur näher erläutert, ohne die Erfindung auf diese spezielle Ausführungsform einzuschränken.

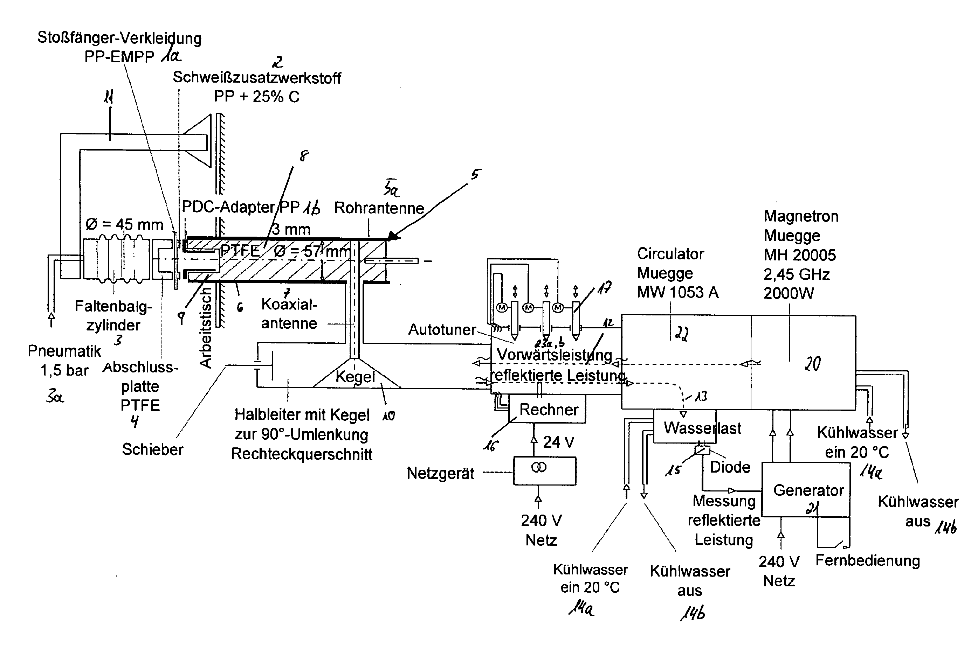

Die Figur zeigt in schematischem Aufbau ein Ausführungsbeispiel einer erfindungsgemäßen Vorrichtung.

Die Schweißvorrichtung selbst besteht aus einer Rohrantenne 5a mit 60 mm Innendurchmesser, die Transversalwellen in einer Schwingungsebene einleitet. Durch Drehen des Wellenfeldes kann sichergestellt werden, dass um den gesamten Umfang von 360° gleichmäßig geschweißt wird. Das Drehen des Mikrowellenfeldes geschieht entweder durch eine Drehvorrichtung oder durch eine Abwandlung des Strahlenganges, sodass sich das Mikrowellenfeld selbständig bewegt. Zur Erzeugung der Mikrowellen mit einer Frequenz von 2,5 GHz ist ein Magnetron 20 vorhanden. Die abgestrahlten Mikrowellen 12 werden in den Zirkulator 22 weitergeleitet, der die Vorwärtsleistung 12 von der reflektierten Leistung 13 trennt. Die Vorwärtsleistung wird über einen Tuner (entweder Autotuner 23a oder manueller Tuner 23b) abgestimmt und über einen Kegel 10, der für Mikrowellen refraktiv und/oder reflexiv ist, in die Rohrantenne 5a eingeleitet. Die Rohrantenne word dabei aus einem Hohlleiter 6 und einem Koaxialleiter 7 gebildet. Von der Rohrantenne 5a wird die Mikrowellenleistung frei abgestrahlt und gelangt damit zu den zu verschweißenden Formteilen 1a, 1b, die bei dieser Ausführungsform z.B. eine Stoßfängerverkleidung 1a und ein PDC-Adapter 1b sind. Die Halterung des PDC-Adapters 1b erfolgt in einer Ausbuchtung 9 der PTFE-Füllung 8 der Rohrantenne 5a, dabei ist die Ausbuchtung 9 so gestaltet, dass der PDC-Adapter 1b formschlüssig in die Ausbuchtung 9 eingefügt werden kann. Eine Anpressvorrichtung 3 spannt die Schweißpartner gegenseitig, bringt den notwendigen Schweißdruck gleichmäßig um den Umfang, d.h. über die Schweißfläche auf. Die Anpressvorrichtung 3 wird dabei über eine pneumatische Steuerung 3a bei einem Druck von ca. 1,5 bar gesteuert. Die Fixierung der Formteile 1a, 1b sowie des Schweißzusatzwerkstoffes 2 erfolgt dabei über eine Abschlussplatte 4, die den von der Anpressvorrichtung 3 aufgebrachten Druck gleichmäßig auf die Formteile verteilt. Bewährt hat sich dazu eine teilweise gelenkige Einspannung mittels beweglichem Gummibalg- und Andruckring, wobei zusätzlich mit einer Unterstützung mittels Druckluft gearbeitet werden kann.

Zwischen die beiden zu verschweißenden Formteile 1a, 1b (z.B. Stoßfängeraußenhaut-Rückseite und PDC-Adapter) wird ein mikrowellensensitives Material 2 gebracht. Dieses mikrowellensensitive Material 2 ist idealerweise ein Polymer derselben Stoffklasse wie die zu verschweißenden Partner 1a, 1b mit Leitfähigkeitsruß. Idealerweise wird dabei für die zu verschweißenden Formteile 1a, 1b und dem mikrowellensensitiven Material 2 die folgende Materialkombination verwendet:
• Außenhaut aus Elastomer-modifiziertem Polypropylen (PP-EMPP),
• Mikrowellensensitives Material aus Polypropylen mit Leitfähigkeitsruß (25 Gew.-%),
• PDC-Halter aus Polypropylen (PP) oder Elastomer-modifiziertem Polypropylen (PP-EMPP), als Homo- oder Copolymer,

Im Versuch wurden dabei Wandstärken für die Außenhaut von 2,3 bis 3,0 mm, für den Schweißzusatzwerkstoff von 0,5 bis 0,7 mm sowie für den PDC-Adapter von 1,5 bis 2,5 mm getestet und als ideale Dicken ermittelt. Der Schweißzusatzwerkstoff 2 ist dabei flächig in der gesamten Fügezone vorhanden. Der Schweißzusatzwerkstoff 2 kann entweder als Folie angelegt werden, oder auf einem der Schweißpartner, z.B. durch Zweikomponentenspritzguss, bereits aufgebracht sein. Dabei ist letzteres Verfahren besonders wirtschaftlich.

Das ideale Tuning kann über einen sog. Autotuner 23a erfolgen, wie in der Figur gezeigt. Dabei ermittelt ein Rechner 16 aus dem Verhältnis zwischen Vorwärtsleistung 12 und reflektierter Leistung 13 den optimalen Arbeitspunkt und tuned diesen automatisch über die elektromotorisch verstellbaren Tunerstifte 17 ein. Nach Feststehen der optimalen Arbeitsleistung kann der Autotuner 23a auch gegen einen einfachen, manuell feststellbaren Tuner 23b ersetzt werden. Die reflektierte Leistung 13 wird im Zirkulator 22 in einen Kühlwasserkreislauf 14a, 14b eingekoppelt und abgeführt. Die Messung der reflektierten Strahlungsleistung 13 erfolgt über eine Diode 15, das von dieser Diode 15 erzeugte Signal wird an den Generator 21, zur Steuerung des Magnetrons 20, rückgekoppelt.

## Patentansprüche

1. Vorrichtung zum mikrowellengeführten Verschweißen von mindestens zwei Formteilen (1a, 1b) aus Thermoplasten, umfassend ein Magnetron (20) mit Generator (21) zur Erzeugung von Mikrowellen mit einer Frequenz zwischen 0,3 und 300 GHz, mindestens ein daran angeordnetes Mittel (5) zum Führen der Mikrowellen zur Schweißzone, sowie eine an das Mittel (5) zum Führen der Mikrowellen angeordnete Anpressvorrichtung (3) zum Zusammenpressen der mindestens zwei Formteile (1a, 1b), die dabei zwischen der Anpressvorrichtung (3) und dem Mittel (5) zum Führen der Mikrowellen anordenbar sind.

2. Vorrichtung nach Anspruch 1, **dadurch gekennzeichnet, dass** das Mittel (5) zum Führen der Mikrowellen eine Rohrantenne (5a) ist.

3. Vorrichtung nach vorhergehendem Anspruch **dadurch gekennzeichnet, dass** die Rohrantenne einen Hohl-(6) und einen Koaxialleiter (7) aufweist.

4. Vorrichtung nach vorhergehendem Anspruch **dadurch gekennzeichnet, dass** der Koaxialleiter (7) zwischen dem Magnetron (20) und dem Hohlleiter (6) angeordnet ist.

5. Vorrichtung nach einem der Ansprüche 3 und 4, **dadurch gekennzeichnet, dass** der Hohlleiter (6) und der Koaxialleiter (7) einen Winkel von 90° einschließen.

6. Vorrichtung nach einem der Ansprüche 3 bis 5, **dadurch gekennzeichnet, dass** die Wandung des Hohl- (6) und des Koaxialleiters (7) aus Metall oder einem elektrisch leitfähigen Material besteht.

7. Vorrichtung nach einem der Ansprüche 3 bis 6, **dadurch gekennzeichnet, dass** der Hohl- (6) und der Koaxialleiter (7) ein für Mikrowellen in einem Frequenzbereich von 0,3 bis 300 GHz permeables Material (8) enthalten.

8. Vorrichtung nach vorhergehendem Anspruch, **dadurch gekennzeichnet, dass** das permeable Material (8) ausgewählt ist aus der Gruppe bestehend aus Thermoplasten, Duroplasten, Keramiken und/oder Gläsern.

9. Vorrichtung nach einem der beiden vorhergehenden Ansprüche, **dadurch gekennzeichnet, dass** permeable Material (8) Polytetrafluorethylen (PTFE) ist.

10. Vorrichtung nach einem der vorhergehenden Ansprüche, **dadurch gekennzeichnet, dass** das Mittel (5) zum Führen der Mikrowellen einen Rohrdurchmesser zwischen 1 mm und der Wellenlänge der Mikrowellen, bevorzugt zwischen 20 mm und 120 mm, ganz besonders bevorzugt zwischen 40 mm und 70 mm aufweist.

11. Vorrichtung nach einem der vorhergehenden Ansprüche, **dadurch gekennzeichnet, dass** mindestens eines der mindestens zwei zu verschweißenden Formteile (1a, 1b) über eine Haltevorrichtung (9) am Mittel (5) zum Führen der Mikrowellen fixierbar ist.

12. Vorrichtung nach einem der vorhergehenden Ansprüche, **dadurch gekennzeichnet, dass** zur Einkoppelung der Mikrowellen in das Mittel (5) zum Führen der Mikrowellen ein für Mikrowellen refraktives und/oder reflexives Element (10) vorhanden ist, das zwischen Koaxialleiter (7) und Magnetron (20) angeordnet ist.

13. Vorrichtung nach vorhergehendem Anspruch, **dadurch gekennzeichnet, dass** das refraktive und/oder reflexive Element (10) in Form eines Kegels ausgestaltet ist.

14. Vorrichtung nach einem der vorhergehenden Ansprüche, **dadurch gekennzeichnet, dass** die Anpressvorrichtung (3) eine pneumatische Steuerung (3a) aufweist.

15. Vorrichtung nach einem der vorhergehenden Ansprüche, **dadurch gekennzeichnet, dass** die Anpressvorrichtung (3) in Form eines flexiblen Faltenbalgzylinders ausgeführt ist.

16. Vorrichtung nach einem der vorhergehenden Ansprüche, **dadurch gekennzeichnet, dass** die Anpressvorrichtung (3) eine Abschlussplatte (4), die in Kontakt mit den mindestens zwei zu verschweißenden Formteilen (1a, 1b) bringbar ist, aufweist.

17. Vorrichtung nach einem der vorhergehenden Ansprüche, **dadurch gekennzeichnet, dass** zusätzlich ein Zirkulator (22), der im Anschluss an das Magnetron (20) angeordnet ist, vorhanden ist.

18. Vorrichtung nach einem der vorhergehenden Ansprüche, **dadurch gekennzeichnet, dass** zur Optimierung der Mikrowellenleistung ein Autotuner (23a) vorhanden ist, der im Anschluss an den Zirkulator (22) angeordnet ist.

19. Vorrichtung nach einem der Ansprüche 1 bis 17, **dadurch gekennzeichnet, dass** zur Optimierung der Mikrowellenleistung ein manueller Tuner (23b) vorhanden ist, der im Anschluss an den Zirkulator (22) angeordnet ist.

20. Vorrichtung nach einem der vorhergehenden Ansprüche, **dadurch gekennzeichnet, dass** die Thermoplaste ausgewählt sind aus Polyolefinen, insbesondere Polyethylen und/oder Polyproplyen, Polyvinylchlorid, Polycarbonaten, Polymethylmethacrylat, Polyamiden, insbesondere Nylon und/oder Perlon, Polystyrol, Polyetherimiden, Polyarylsulfonen, Polyphenylsulfiden, Polyphenyloxiden, Polysulfonen, Polyethersulfonen, Polyetherethersulfonen und/oder Blends hieraus.

21. Vorrichtung nach einem der vorhergehenden Ansprüche, **dadurch gekennzeichnet, dass** die mindestens zwei zu verschweißenden Formteile (1a, 1b) aus demselben oder verschiedenen Thermoplasten und/oder deren Blends bestehen.

22. Vorrichtung nach einem der vorhergehenden Ansprüche, **dadurch gekennzeichnet, dass** die mindestens zwei zu verschweißenden Formteile (1a, 1b) weitere Zusatzstoffe, ausgewählt aus der Gruppe bestehend aus Weichmachern, Flammschutzmitteln, Verstärkungsfasern und/oder Pigmenten enthalten.

23. Vorrichtung nach einem der vorhergehenden Ansprüche, **dadurch gekennzeichnet, dass** sie auf einem Roboter (11) angebracht ist.

24. Vorrichtung nach einem der vorhergehenden Ansprüche, **dadurch gekennzeichnet, dass** eine Drehvorrichtung zum Drehen des Mikrowellenfeldes vorhanden ist.

25. Vorrichtung nach Anspruch 24, **dadurch gekennzeichnet, dass** die Drehvorrichtung an der Haltevorrichtung (9) angeordnet ist und so auf diese einwirkt, dass eine Rotation der in der Haltevorrichtung (9) fixierbaren, mindestens zwei zu verschweißenden Formteilen (1a, 1b) bewirkt wird.

26. Vorrichtung nach Anspruch 24, **dadurch gekennzeichnet, dass** die Drehvorrichtung auf das Mittel (5) zum Führen der Mikrowellen einwirkt und eine Drehung des Mittels (5) zum Führen der Mikrowellen um 1 ° bis 359 ° bewirkt.

27. Vorrichtung nach Anspruch 24, **dadurch gekennzeichnet, dass** die Drehvorrichtung derart am Mittel (5) zum Führen der Mikrowellen angeordnet ist, dass es eine teilweise Auskopplung der Mikrowellenstrahlung aus dem Mittel (5) zum Führen der Mikrowellenstrahlung, Drehung der Schwingungsebene der Transversalwellen der Mikrowellen um mindestens 30 °, höchstens jedoch um 180 ° und anschließend eine erneute Einkopplung der Mikrowellen in das Mittel (5) zum Führen der Mikrowellenstrahlung bedingt.

28. Verfahren zum mikrowellengeführten Schweißen von mindestens zwei zu verschweißenden Formteilen (1a, 1b) aus Thermoplasten mittels einer Vorrichtung nach einem der Ansprüche 1 bis 27, **dadurch gekennzeichnet, dass** Mikrowellen gerichtet zu den mindestens zwei zu verschweißenden Formteilen (1a, 1b) geleitet werden.

29. Verfahren nach vorhergehendem Anspruch, **dadurch gekennzeichnet, dass** die Mikrowellen über eine einen Hohl- (6) und einen Koaxialleiter (7) aufweisende Rohrantenne (5) geführt werden.

30. Verfahren nach einem der Ansprüche 28 bis 29, **dadurch gekennzeichnet, dass** die Mikrowellen über ein für Mikrowellen refraktives und/oder reflexives Element (10) in die Rohrantenne (5) eingekoppelt werden.

31. Verfahren nach einem der Ansprüche 28 bis 30, **dadurch gekennzeichnet, dass** die von dem refraktiven und/oder reflektiven Element (10) in Richtung des Magnetrons (20) zurückreflektierte Strahlung über einen Zirkulator (22) abgeführt wird.

32. Verfahren nach vorhergehendem Anspruch, **dadurch gekennzeichnet, dass** eine Messung der rückreflektierten Strahlungsleistung erfolgt.

33. Verfahren nach einem der beiden vorhergehenden Ansprüche, **dadurch gekennzeichnet, dass** die vom Generator (21) abgegebene Leistung zum Betreiben des Magnetrons (20) in Abhängigkeit von der ermittelten rückreflektierten Strahlungsleitung gesteuert wird.

34. Verfahren nach vorhergehendem Anspruch, **dadurch gekennzeichnet, dass** die Leistungsabgabe des Generators (21) zwischen 0,1 kW und 100 kW, bevorzugt 0,8 und 1,5 kW beträgt.

35. Verfahren nach einem der Ansprüche 28 bis 34, **dadurch gekennzeichnet, dass** die von den mindestens zwei zu verschweißenden Formteilen (1a, 1b) aufgenommene Strahlungsleistung zwischen 50 W und 2000 W, bevorzugt zwischen 100 W und 400 W, ganz besonders bevorzugt zwischen 150 W und 250 W liegt.

36. Verfahren nach einem der Ansprüche 28 bis 35, **dadurch gekennzeichnet, dass** in der Rohrantenne (5) ein Drehen des Mikrowellenfeldes erfolgt.

37. Verfahren nach einem der Ansprüche 28 bis 36, **dadurch gekennzeichnet, dass** zwischen die mindestens zwei zu verschweißenden Formkörper (1a, 1b) ein Mikrowellen sensitives Material (2) eingebracht wird.

38. Verfahren nach vorhergehendem Anspruch, **dadurch gekennzeichnet, dass** das mikrowellensensitive Material (2) eine in eine Trägermatrix eingebettete Mikrowellen absorbierende Komponente enthält.

39. Verfahren nach vorhergehendem Anspruch, **dadurch gekennzeichnet, dass** die Trägermatrix ein Thermoplast ist.

40. Verfahren nach einem der beiden vorhergehenden Ansprüche, **dadurch gekennzeichnet, dass** der Thermoplast ausgewählt ist aus der Gruppe bestehend aus Polypropylen, Elastomer modifiziertes Polypropylen (PP-EMPP), Polyamid (PA), Polyvinylchlorid (PVC), Polyester, Polyvinylidendifluorid (PVDF), Polycarbonat (PC), Polymethylmethacrylat (PMMA), Acrylnitril-Butadien-Styrol (ABS) und/oder Polyethylen (PE).

41. Verfahren nach vorhergehendem Anspruch, **dadurch gekennzeichnet, dass** der Thermoplast aus dem gleichen oder einem verschiedenem Material besteht, wie die mindestens zwei zu verschweißenden Formteile (1a, 1b).

42. Verfahren nach einem der Ansprüche 38 bis 41, **dadurch gekennzeichnet, dass** die Mikrowellen absorbierende Komponente Ruß ist.

43. Verfahren nach dem vorhergehenden Anspruch, **dadurch gekennzeichnet, dass** der Ruß Leitfähigkeitsruß ist.

44. Verfahren nach einem der beiden vorhergehenden Ansprüche, **dadurch gekennzeichnet, dass** der Ruß in der Trägermatrix in einer Menge zwischen 10 und 50 Gew.-%, bevorzugt zwischen 15 und 40 Gew.-%, ganz besonders bevorzugt zweite 20 und 30 Gew.-% enthalten ist.

45. Verfahren nach einem der Ansprüche 37 bis 44, **dadurch gekennzeichnet, dass** das mikrowellensensitive Material (2) in Form einer Folie eingesetzt wird.

46. Verfahren nach vorhergehendem Anspruch, **dadurch gekennzeichnet, dass** die Folie eine Dicke zwischen 0,1 mm und 3 mm, bevorzugt 0,2 und 0,8 mm aufweist.

47. Verfahren nach einem der Ansprüche 37 bis 44, **dadurch gekennzeichnet, dass** das mikrowellensensitive Material auf mindestens eines der mindestens zwei zur schweißenden Formteile (1a, 1b) als dünne Schicht durch Zweikomponentenspritzguss aufgebracht wird.

48. Verfahren nach einem der Ansprüche 28 bis 47, **dadurch gekennzeichnet, dass** während des Schweißprozesses die mindestens zwei zu verschweißenden Formteile (1a, 1b) aneinandergepresst werden.

49. Verfahren nach einem der Ansprüche 28 bis 48, **dadurch gekennzeichnet, dass** die Dauer des Schweißprozesses 0,5 s bis 25 s, vorzugsweise 1 s bis 15 s, ganz besonders bevorzugt 3 s bis 5 s beträgt.

50. Verwendung des Verfahrens nach einem der Ansprüche 28 bis 49 in der Serienproduktion.

51. Verwendung des Verfahrens nach einem der Ansprüche 28 bis 49 in vollautomatisierten Prozessen.

52. Verwendung des Verfahrens nach einem der Ansprüche 28 bis 49 zur Herstellung von Formteilen in der Automobilindustrie.

53. Verwendung nach vorhergehendem Anspruch, **dadurch gekennzeichnet, dass** die Formteile eine mechanisch und/oder optisch sensible Oberfläche aufweisen.

54. Verwendung nach einem der Ansprüche 52 bis 53, **dadurch gekennzeichnet, dass** die Formteile eine lackierte Oberfläche aufweisen.

55. Verwendung nach vorhergehendem Anspruch, **dadurch gekennzeichnet, dass** die Oberfläche mit einem Metalliclack lackiert ist.

56. Verwendung nach einem der Ansprüche 52 bis 54, **dadurch gekennzeichnet, dass** die Formteile ausgewählt sind aus der Gruppe bestehend aus Stoßfängern, Überzügen, Kotflügeln und Heckspoilern.
